# EUROPEAN PATENT APPLICATION

(11) **EP 1 274 192 A1**
(43) Date of publication of application: **08.01.2003**
(21) Application number: 01440203.6
(22) Date of filing: 04.07.2001
(51) Int. Cl.: H04J 14/08, G02F 1/35

(54) **OTDM device**

(71) Applicant: ALCATEL, 75008 Paris (FR)
(72) Inventor: Lach, Eugen, 71672 Marbach (DE)
(74) Representative: Rausch, Gabriele, Dr.

(57) **Abstract**

The invention refers to a fiber optical time division multiplexing (OTDM) device for modulating a laser carrier (42) by some modulation signal (51), comprising at least one interferometrical unit (15). The interferometrical unit (15) comprises a first and a second optical path each one of said optical paths comprising one semiconductor optical amplifier (SOA) (17a,17b), and one input port (19a,19b) for some optical control signal (51a,51b). The interferometrical unit (15) further comprises one input port (16) for said laser carrier (42) and one output port (18) for some optical output signal (43), said carrier input port (16) and said output port (18) beeing common to both said optical paths. The invention is characterized in that a plurality of interferometrical units are cascaded one behind the other in such way, that the output signal of one interferometrical unit can be coupled into the carrier input of the following interferometrical unit.

## Description

The invention refers to an fiber optical time division multiplexing (OTDM) device according to the first portion of claim 1.

Optical fibers are an extremely efficient transmission medium, widely used in telecommunication systems. With the quickly increasing amount of data being exchanged on such systems, the need for even faster transmission is increasing accordingly. The capacity of optical fibers is mainly limited by certain factors including the efficiency of utilisation of the optical fiber bandwidth and the pulse rate of the data trains, that can be generated. Both factors are not independent from each other.

In classical OTDM devices a pulse train of, for example 10 GHz is emitted by a pulsed laser source. This signal is split in several, for example four, portions of the same intensity, showing the same, original 10 GHz pulse pattern. Each of these portions is fed into a switching device, responsive to a 10 Gb/s control signal. The four different control signals represent four different time divisional portions of a 40 Gb/s data signal to be generated and transmitted. The switched output signals of the four switching devices are then recombined at a common output port with a certain time lag between each of them to generate the 40 Gb/s data signal.

The maximum speed of such devices ist strongly limited to data rates of the order of magnitude mentioned above. The reason has to be seen in a trade-off between pulse length and spectral efficency. When recombining the signal portions at the common output port subsequent pulses tend to interfere with each other, a phenomenon known as "coherent crosstalk" and due to a lack of correlation between the phases of subsequent pulses.

Coherent crosstalk leads to strong system penalty. To avoid such system penalty the individual pulses have to be extremely short and well spaced in time. Short pulses, however, lead to a large bandwidth, which lowers the spectral efficiency of the system, because neighbouring wavelength divisional signals have to spaced accordingly far away.

It would, thus, be preferable to use a continous wave (CW) laser source with a very narrow bandwith rather than a pulsed one. The problem, however, is to modulate the CW carrier at high enough rates. There are devices capable of modulating a CW carrier by about 40 GHz. Such devices are known as interferometrical switches. Like in all kinds of interferometers two different optical paths are provided to the light of the optical CW source. The carrier is fed into the carrier input port of the interferometer, common to both the optical paths. It is then split into two portion, each of them travelling along one optical path. Each optical path provides a semiconductor optical amplifier (SOA) to amplify the carrier before the two portions are recombined at the common output port. Here the two portions interfere with each other. Thus, the intensity of the output signal depends upon the relative phase between the two portions of the carrier. A constructive interference leads to maximum output intensity, while a destructive interference can supress the output signal completely, if the two portions of the carrier have an identical intensity.

The dependence on the relative phase can be used to modulate the intensity of the output signal by varying the optical characteristics of one of the optical paths relative to the other one. Electro-optical devices use the electro-optical effect to introduce a phase shift to one of the two carrier portions. However, the electro-optical effect is relatively slow compared to the extremely high data rates, that should be transmitted by fiber optical telecommunication systems.

An acceleration can be achieved by so called all-optical devices. Here the characteristics of one optical path and especially of the SOA can be modified by coupling an additional light, the optical control signal, into one of the paths.

For example, a CW laser carrier of wavelength λ₁ is coupled into the carrier input port of the switch. The switch is biased in a way, that the two portions of the carrier interfere constructively. If a control signal, for example a short pulse of wavelength λ₂ is now coupled into the first optical path, it modifies the characteristics of the SOA very fast, i.e. the phase of the first portion of the carrier shifts abruptly, which means, the intensity of the output signal drops dramatically. Thus, such a switch can be used to modulate the carrier by the optical control signal, which can be an arbitrary pulse pattern.

However, there are close speed limits. The light pulse changes the characteristics of the SOA very fast, but its recovery after the pulse is much slower. Thus, the intensity of the output light shows a sharp drop, but a slow relaxation to the original value. If, on the other hand a second pulse is fed into the second optical path with a time delay relative to the first one, which is much shorter than the relaxation time of the first SOA, the characteristics of the second SOA can be changed in almost the same way as the first one. If both the phases of the first and the second portion of the carrier are shifted in the same way, there is no relative phase lag between them any more and the intensity of the output signal jumps back to the original value. The common relaxation of the two SOAs has no effect on the output intensity since the relative phase between the two portions stays constant. Thus, the output signal can be modulated with very sharp negative pulses, the width of which is equal to the time delay between the first and the second control pulse.

However, a strong disadvantage of this technique ist the long time, that has to elapse before the next control pulse can be applied. As mentioned before, the common relaxation of the two SOAs does not introduce a phase lag between the two portions of the carrier, but the SOAs need quite some time to become responsive to the next control pulse again. This limits such devices to a maximum data rate of about 40 Gb/s, which is no advantage with respect to the classical OTDM devices explained above.

It is an object of the invention to provide an OTDM device of increased data rates, while avoiding a decrease of spectral efficiency.

This problem is solved by a device showing the features of claim 1. Rather than a single interferometrical switch a plurality of interferometrical units are cascaded one behind the other in such way, that the output signal of one interferometrical unit can be coupled into the the carrier input port of the following interferometrical unit. Such device can be used according to the method of claim 20. Like in known devices the pulse pattern of the data signal can be represented by a number of time divisonal components of a high frequency modulation signal. The number of components may be equal to the number of cascaded interferometrical units. These components are used as individual control signals for the individual interferometrical units. They are coupled into the control signal input ports of the interferometrical units, where each interferometrical unit receives the identical time divisional pulse pattern component at both its control signal input ports. As explained before a time lag between the control patterns is necessary in order to form finite pulses at the common outout port of each interferometrical unit. This can be achieved by either coupling one control pattern into the two control input ports of a interferometrical unit with a certain time delay or by a special design of the interferometrical unit itself.

As a result a data rate can be achieved, which is equal to a multiple of the maximum data rate achievable with a single interferometrical switch. In contrast to the classical OTDM device, where a number of parallel switches is provided, no coherent crosstalk is limiting the performance, because the phases of subsequent pulses are well defined. Also, because the carrier source can be a narrow band CW laser source the spectral efficency of a system comprising a device according to the invention can be maximized.

Further advantages of the invention can be read from the dependent claims and the specific part of the description. For a better understanding the invention as well as the state of the art have been schematically depicted in the drawing. The figures show
- fig. 1:: a classical OTDM device according to the state of the art,
- fig. 2:: an interferometrical switch configured as a Mach-Zehnder (MZ) switch,
- fig. 3:: two schematical plots of
a) the phases of the two portions of the carrier interfering at the common output port and
b) the resulting intensity of the switched output signal,
- fig. 4:: an arrangement of four cascaded interferometrical MZ-switches according to the invention.

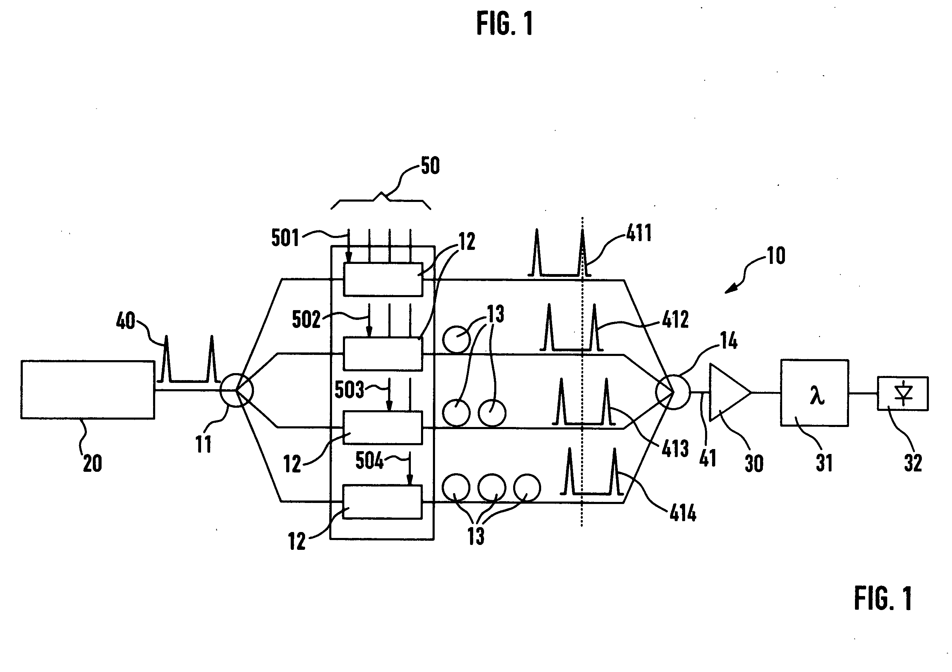

Fig. 1 schematically shows a classical OTDM device 10. A pulsed laser source 20, that can, for example, be a monolithic mode-locked laser emits a pulsed laser carrier 40, preferably in the near infrared spectral region. Typical pulse rates are about 10 GHz. At the common input port 11 the pulse train 40 is split into four components of the same intensity, each one still representing the original 10 GHz pulse pattern. Each component ist fed into an OTDM switch 12, which can be of any known kind. The switches 12 only have to capable of switching 10 GHz pulse trains. They are controlled by individual control signals 501-504. These signals can consist of optical or electrical pulse patterns, each of them representing a time divisional component of a high frequency modulation signal 50. After the switching has occurred, the switched pulse trains travel through different optical delay lines 13, which introduce a relative delay between them. The delay introduced at most must be shorter than the distance between two pulses of the trains. The switched pulse trains are then recombined at the common output port 14. If the lengths of the delay lines are well calculated the output signal 41 represents a pulse train of a basic pulse rate, that equals a multiple of the original 10 GHz carrier 40 and which is modulated by the modulation signal 50. In the specific case of fig. 1 a 40 Gb/s output signal is generated. According to specific construction of the device 10 further components like an EDFA 30, a filter 31 to block the optical control signals 501-504and/or a pin detector (32) may be necessary.

As explained above the main disadvantage of such a device 10 is the coherent crosstalk between individual pulses after they have been combined at the common output port 14. The possible solution, namely to decrease the width of the individual pulses emitted by the laser source 20 is not attractive in terms of spectral efficiency. Thus, such systems are mainly restricted to output data rates of about 40 Gb/s.

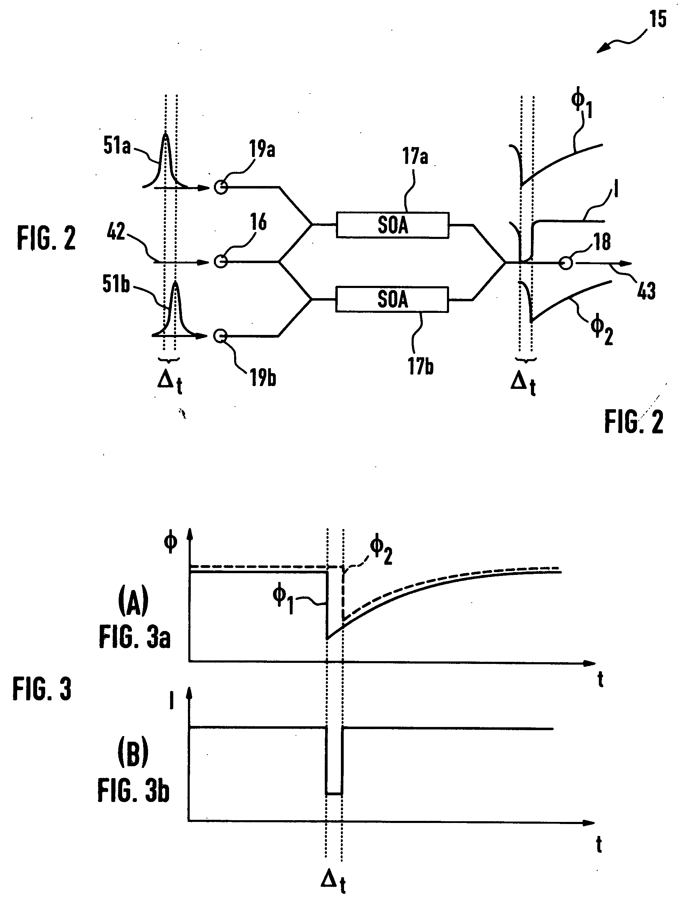

The invention uses interferometrical switches controlled by two control signals each. Fig. 2 shows one such interferometrical untit 15. A laser carrier 42, that is preferably a CW laser light of a very narrow band width, is coupled into the common carrier input port 16 of the interferometrical unit 15. The carrier is split into two portions of preferably equal intensity, each one travelling along one of the optical paths a or b of the interferometrical unit 15. On its way each portion is amplified by the according SOA 17a or 17b. At the common output port 18 both portions are recombined and interfere with each other, preferably in a constructive way.

The optical characteristics of each SOA 17a, 17b can be controlled by a control signal 51a, 51b. These control signals 51a, 51b are styled as optical pulse trains and are fed into the according control signal input ports 19a, 19b. They preferably represent the same pulse pattern, but show a small time delay Δt between them. When the first control pulse 51a reaches the SOA 17a the phase φ₁ of the carrier portion travelling along the first optical path of the interferometrical unit 15 changes. As a result the interference at the common output port 18 is no longer constructive, the intensity I of the output signal 43 drops. Its recovery, however, would be very slow if it depended only on the relaxation of the SOA 17a. The phase relaxation is shown in detail in fig. 3a. The intensity relaxation would behave in the same way, if no second control pulse 51b had been provided. As soon as the second control pulse 51b reaches the SOA 17b the phase φ₂ of the carrier portion travelling along the second optical path of the interferometrical unit 15 changes, too. As a result the two portions of the carrier 42 no longer show a phase lag and the interference has become constructive again. This means, that the intensity I jumps back to its original value, as shown in fig. 3b.

Components of the state of the art arranged in the way described above are capable of generating output signals 43 of about 40 Gb/s, which is no advantage in comparison to the classical devices described further above and shown in fig. 1. The reason for this is, that, even if the relative phase lag between the two portions of the carrier could be destroyed by the application of the second control pulse 51b, new pulses can't be applied before the two SOAs have completely relaxed. Thus, a device 15 as shown in fig. 2 represents a good means of pulse shaping, but is not capable of increasing the resulting data rate.

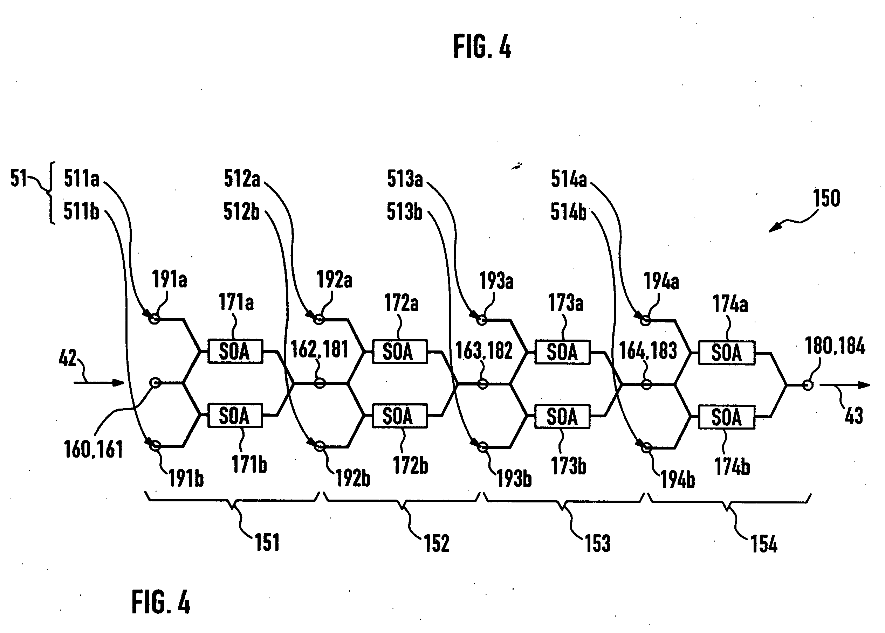

This acceleration effect can only be be achieved, if, according to the invention and as shown in fig. 4, several interferometrical units 151-151 are arranged in a cascaded manner. Fig. 4 shows a cascade of four interferometrical units 151-154, each one comprising a carrier input port 161-164, two SOAs 171a-174a, 171b-174b - one in each optical path of each interferometrical unit 151-154 - and an output port 181-184. The SOAs 171a-174a, 171b-174b are controlled by the control signals 511a-514a, 511b-514b, which are individually fed into the according control signal input ports 191a-194a, 191b-194b of the according optical path of the according interferometrical unit 151-154.

Preferably the control signals 511a-514a, 511b-514b represent time divisional components of a high frequency modulation signal 51. If the control signals 511a and 511b represent the same pulse train of 40 GHz with a short time delay Δt between them, the CW carrier 42 is modulated by a 40 Gb/s modulation signal when passing the first interferometrical unit 151. If this signal now is fed into the carrier input port 162 of the second interferometrical unit 152, and if the control signals 512a and 512b also represent identical pulse trains of 40 GHz with a time delay Δt between them, the carrier 42 shows a 80 Gb/s modulation at the output port 182 of the second interferometrical unit 152. Like this the whole cascade shown in fig. 4 introduces a 160 Gb/s modulation to the CW laser carrier 42, fed into the device input 160 and emits such modulated output signal 43 at its device output port 180.

Using the preferred method of running a device according to the invention the control signals 511a-514a, 511b-514b are pairwise time divisional components of an overall high frequency modulation signal. However, they can also be individual modulation signals, that would need to be demultiplexed in a receiver. It is only important, that the control signals have identical frequencies or that their frequencies are at least multiples of each other, so that the pulses of the individual control signals are always well separated from each other.

The Figs. 2 and 4 show as a specific arrangement of the interferometrical units (15; 151-154) a MZ-configuration. This means, that the two optical paths are substantiall parallel to each other. This configuration is the preferred one, because this type of interferometer is easy to integrate. However, other interferometrical conceps, like, for example, Sagnac or Michelson configurations are applicable, too.

The devices in figs. 2 and 4 show control input ports 191a-194a, 191b-194b, that allow the control pulses to travel in the same direction as the carrier. In this configuration it is preferred, that the control signals 511a-514a, 511b, 514b and the carrier 42 have different wavelengths allowing the control pulses to be filtered out before entering the subsequent interferometrical unit 151-154 in the arrangement of fig. 4. However, it is also possible to couple the control signals 511a-514a, 511b, 514b into the system in a counterpropagating way. In this configuration it is preferred to use an optical isolater between the differnt interferometrical units 151-154.

As explained, the pulse width of the output pulses depends directly upon the time delay Δt. Thus, Δt is an important parameter. There are several possibilities to introduce the time delay Δt. In a preferred embodyment of the invention the optical paths a and b in each interferometrical unit 151-154 are of identical length and the SOAs in each optical path have the same distance from the corresponding control signal input port 191a-194a, 191b-194b. In such a configuration the time delay Δt is introduces by shifting the corresponding pulse trains relative to each other, e.g. by means of a delay line, before coupling them to control input ports. For the same purpose it is also possible to use different lengths of the optical paths and/or to arrange the SOAs in different places in their according optical path.

Even though the device according to the invention can be set up from individual components it is preferred to build it as a piece of intergrated optics, which would be easy to use and cheap to manufacture.

Especially in such a piece of integrated optics, but also in other configurations, the laser source emitting the carrier 42 can be incorporated. In any case, the laser used, is preferably a narrow band CW laser. However, a pulsed laser source, having preferably a pulse rate corresponding to the maximum data rate of the modulation signal can be used alternatively.

Like the laser source, the emitters of the control signals 511a-514a, 511b, 514b can also make part of the whole arrangement 150, especially if it is built as a piece of integrated optics.

In the examples given above the single interferometrical units 151-154 are biased in a way, that leads to constructive interference in the absence of a control signal. However, it is also possibel to bias them in a way leading to destructiv interference an emitting an output signal only in the presence of a control pulse. In such a configuration the individual control signals have to designed in a more complex way to yield a suitable overall output signal 43.

## Claims

1. Fiber optical time division multiplexing (OTDM) device (150) for modulating a laser carrier (42) by some modulation signal (51),
comprising at least one interferometrical unit (151-154),
said interferometrical unit (151-154) comprising a first and a second optical path,
each one of said optical paths comprising one semiconductor optical amplifier (SOA) (17a, 17b), and one input port (191a-194a, 191b-194b) for some optical control signal (511a-514a, 511b-514b),
said interferometrical unit (151-154) further comprising one input port (160, 161-164) for said laser carrier (42) and one output port (180, 181-184) for some optical output signal (43), said carrier input port (160, 161-164) and said output port (180, 181-184) beeing common to both said optical paths,
one portion of said laser carrier (42), beeing coupled to said common carrier input port (160, 161-164), travelling along said first optical path, while another portion of said laser carrier (42) travelling along said second optical path, both portions beeing individually amplified by the SOA (17a, 17b) and beeing interferometrically reunified at said common output port (180, 181-184),
the actual phase of each one of said portions of said laser carrier (42) depending on the according control signal (511a-514a, 511b-514b) influencing the characteristics of the according SOA (171a-174a, 171b-174b),
**characterized in that**
a plurality of interferometrical units (151-154) are cascaded one behind the other in such way, that the output signal of one interferometrical unit can be coupled into the carrier input port of the following interferometrical unit.

2. OTDM device according to claim 1, **characterized in that** the interferometrical units (151-154) are configured as Mach-Zehnder (MZ) interferometers, both said optical paths beeing substantially parallel.

3. OTDM device according to one of the claims 1 or 2, **characterized in that** at least one control signal (511a-514a, 511b-514b) is travelling in the same direction as the according portion of the carrier (42).

4. OTDM device according to one of the claims 1 to 3, **characterized in that** at least one one control signal (511a-514a, 511b-514b) is travelling in the opposite direction than the according portion of the carrier (42).

5. OTDM device according to one of the claims 1 to 4, **characterized in that** the two optical paths of at least one interferometrical unit (151-154) have substantialy the same length.

6. OTDM device according to one of the claims 1 to 5, **characterized in that** the two optical paths of at least one interferometrical unit (151-154) have different lengths.

7. OTDM device according to one of the claims 1 to 6, **characterized in that** the two optical paths of one interferometrical unit (151-154) have a different distance between the control input port (191a-194a, 191b-194b) and the according SOA (171a-174a, 171b-174b).

8. OTDM device according to one of the claims 1 to 7, **characterized in that** a laser source emitting the laser carrier (42) is provided in front of the first interferometrical unit (151).

9. OTDM device according to claim 8, **characterized in that** the laser source emits light of the near infrared (NIR) spectral region.

10. OTDM device according to one of the claims 8 or 9, **characterized in that** the laser source is a continous wave (CW) laser source.

11. OTDM device according to one of the claims 8 or 9, **characterized in that** the laser source is a pulsed laser source.

12. OTDM device according to claim 11, **characterized in that** the pulse rate of the laser source corresponds to the maximum data rate of the modulation signal (51).

13. OTDM device according to one of the claims 1 to 12, **characterized in that** at least one modulatable optical source emitting a control signal(511a-514a, 511b-514b) is provided, the light of which can be coupled into the control signal inputs (191a-194a, 191b-194b) of at least one interferometrical unit (151-154).

14. OTDM device according to claim 13, **characterized in that** for each interferometrical unit (151-154) one control signal optical source is provided.

15. OTDM device according to one of the claims 13 or 14, **characterized in that** the paths, on which the control signal (511a-514a, 511b-514b) travels from the control signal optical light source to the two control signal input ports (191a-194a, 191b-194b) of one interferometrical unit (151-154) have substanlially the same lenghts.

16. OTDM device according to one of the claims 13 or 14, **characterized in that** the paths, on which the control signal (511a-514a, 511b-514b) travels from the control signal optical light source to the two control signal input ports (191a-194a, 191b-194b) of one interferometrical unit (151-154) are of different lengths.

17. OTDM device according to one of the claims 1 to 16, **characterized in that** the device (150) is built as a piece of integrated optics.

18. OTDM device according to one of the claims 1 to 16, **characterized in that** the device (150) is built as an arrangement of individual interferometrical units (51-154).

19. Fiber optical telcommunication network,
**characterized in that**
at least one device (150) according to one of the claims 1 to 18 is provided.

20. Method to modulate a laser carrier by some modulation signal,
**characterized in that**
by use of an OTDM device (150) according to one of the claims 1 to 18 a laser carrier (42) is coupled into the carrier input port (160, 161) of the first interferometrical unit (151) and a modulation signal (51), consisting of a number of time divisional pulse pattern components (511a-514a, 511b-514b) corresponding to the number of interferometrical units (151-154), is coupled into the control signal input ports (191a-194a, 191b-194b) of the interferometrical units (151-154), where each interferometrical unit (151-154) receives the identical time divisional pulse pattern component (511a-514a, 511b-514b) at both its control signal input ports (191a-194a, 191b-194b).

21. Method according to claim 20, **characterized in that** the identical pulse patterns (511a-514a, 511b-514b) beeing coupled into the two control signal input ports (191a-194a, 191b-194b) of one interferometrical unit (151-154) are received with a time lag between the two input ports (191a-194a, 191b-194b).

22. Method according to claim 20, **characterized in that** the identical pulse patterns (511a-514a, 511b-514b) beeing coupled into the two control signal input ports (191a-194a, 191b-194b) of one interferometrical unit (15-154) are received with at the same time by the two input ports (191a-194a, 191b-194b).
